# EUROPEAN PATENT SPECIFICATION

(11) **EP 2 550 791 B1**
(45) Date of publication and mention of the grant of the patent: **18.07.2018**
(21) Application number: 11714453.5
(22) Date of filing: 21.03.2011
(51) Int. Cl.: H04L 29/08

(54) **SYSTEM AND METHOD FOR SECURE MULTI-CLIENT COMMUNICATION SERVICE**
SYSTEM UND VERFAHREN FÜR SICHEREN MULTI-CLIENT-KOMMUNIKATIONSDIENST
SYSTÈME ET PROCÉDÉ OFFRANT UN SERVICE DE COMMUNICATION SÉCURISÉ ENTRE DE MULTIPLES CLIENTS

(30) Priority: 23.02.2011 US 201113032689; 22.03.2010 US 316032 P
(43) Date of publication of application: 30.01.2013
(73) Proprietor: Siemens Product Lifecycle Management Software Inc., Plano, TX 75024 (US)
(72) Inventor: BOYDSTUN, Louis E., Wyoming, Ohio 45215 (US); OLAWSKY, Duane Evan, Eden Prairie, Minnesota 55346 (US); RAJ, Joseph Amal, Ames, Iowa 50014 (US)
(74) Representative: Maier, Daniel Oliver
(86) International application number: PCT/US2011/029187
(87) International publication number: WO 2011/119482

(56) References cited:
- WO-A2-99/66384
- US-A1- 2004 006 615
- US-A1- 2007 289 006
- RAFFAELLA GRIECO ET AL: "A Scalable Cluster-based Infrastructure for Edge-computing Services", WORLD WIDE WEB ; INTERNET AND WEB INFORMATION SYSTEMS, KLUWER ACADEMIC PUBLISHERS, DO, vol. 9, no. 3, 8 June 2006 (2006-06-08), pages 317-341, XP019438283, ISSN: 1573-1413, DOI: DOI:10.1007/S11280-006-8559-X

## Description

This invention relates to a method, a product data management data processing system and a computer-readable medium for Secure Multi-Client Communication Service according to the independent claims.

### TECHNICAL FIELD

The present disclosure is directed, in general, to systems and methods for use in electronic communications.

### BACKGROUND OF THE DISCLOSURE

Data processing systems often operate in a client-server relationship, communicating over a communication network. Systems acting as servers provide resources or services to systems acting as clients. A data processing system may include some processes acting as clients and other processes acting as servers. A client server pair may be in the same data processing system or in different data processing systems. Examples of clients include web browsers and email clients. Examples of servers include web servers and file servers. Examples of networks used by clients and servers to communicate include the public Internet and privates intranets.

A process in a data processing system may operate as a proxy server-that is, an intermediary for requests from clients seeking resources from other servers. A client typically connects to the proxy server and requests a service or resource that is provided by a different server. The proxy server typically provides the requested resource by connecting to the appropriate server and requesting the service on behalf of the client.

A forward proxy is an intermediate system that enables a local client to connect to a remote server. A forward proxy may also be used to cache data, reducing load on the networks between the forward proxy and the remote server. Such a forward proxy server may also be referred to as a "client cache."

A reverse proxy is a server system that is capable of serving resources sourced from other servers making the resources look like they originated at the reverse proxy. A reverse proxy may act as a cache for slower backend servers. A reverse proxy may also enable resources served using different server systems or architectures to coexist inside a common URL space.

Either a forward proxy or a reverse proxy may provide authentication or other security services for a client requesting a resource. Some client requests pass through both a forward proxy and a reverse proxy in obtaining the requested resource from the resource server. International patent application WO99/66384 is further prior-art.

### SUMMARY OF THE DISCLOSURE

The invention is defined by the independent claims. Various embodiments include a data processing system, method, and computer readable medium. A method for providing centralized communication services to a plurality of client applications includes caching one or more responses to a first plurality of requests received from a plurality of client applications. The method also includes mapping one or more of a second plurality of requests received from the plurality of client applications to one or more forward proxy servers. The method further includes sending two or more of the second plurality of requests to one of the one or more forward proxy servers via a single HTTP channel. The method also includes obtaining in the communication server responses to one or more authentication challenges received from the one or more forward proxy servers in response to one or more of the second plurality of requests.

Other embodiments include other features, and include data processing systems particularly configured to perform certain processes as described herein, and include computer-readable storage mediums encoded with computer-executable instructions that, when executed, cause a data processing system to perform processes as described herein.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
FIGURE 1 depicts a block diagram of a data processing system in which an embodiment can be implemented;
FIGURE 2 depicts a block diagram of a system according to the disclosure;
FIGURES 3A and 3B depict a process in accordance with the disclosure; and
FIGURE 4 depicts a process in accordance with the disclosure.

### DETAILED DESCRIPTION

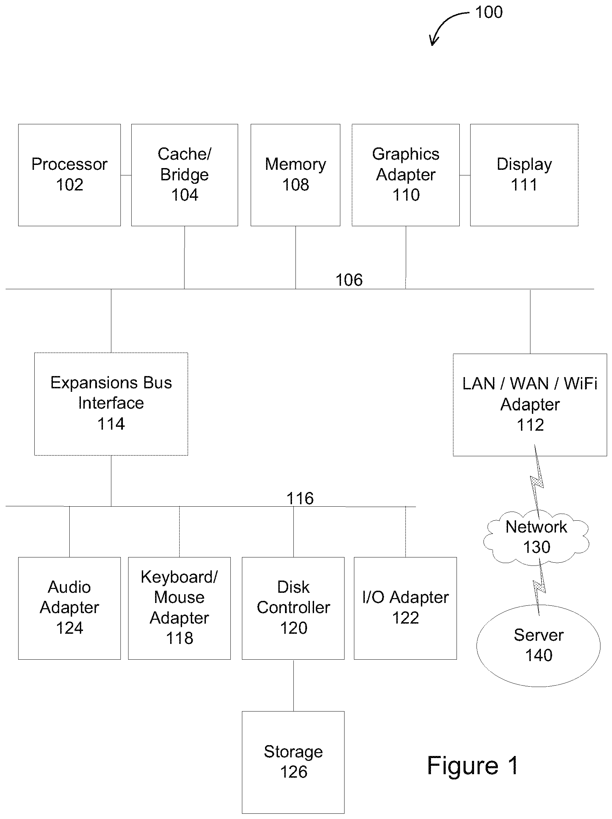

FIGURES 1 through 4, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

In some data processing systems, client applications may be obtained from multiple sources or from multiple development teams within a single source. Client applications operating in a single data processing system may have been developed in differing programming environments - for example, the C++ or Java programming language, or the .NET framework, provided by Microsoft Corporation of Redmond, Washington.

Client and server applications that require access to Internet and intranet resources face a number of challenges in accessing the necessary network resources, including user authentication against corporate directories, forward proxies, reverse proxies, internet Hypertext Transfer Protocol (HTTP) and Web Services security standards, vendor authentication protocols, and identity federation between security domains. In situations where each client or server application develops software features to handle such issues, the result may be mixed levels of support by different applications for the various features, lagging support in some applications for more recent internet and security standards. A client application that navigates an organization's security infrastructure improperly may present a user with multiple security challenges, or may fail to access requested resources.

Some organizations use forward proxy servers to control access of clients to Internet or intranet resources and to cache responses to optimize network access. Users in such organizations typically set their browser clients to use the forward proxy server when accessing the network. When a client application is deployed in such an environment, the client must adapt to the requirements of the forward proxy server, including submission of requests to a proxy address (in addition to the address for the requested resource) and authentication procedures with the proxy server. Some organizations configure proxy access centrally for all clients using a mechanism called proxy auto-configuration. Browsers and other clients are set to download an auto-configuration file at startup. Client applications must utilize this central configuration file to fit in automatically to such an organization's deployment environment.

Secure multi-client communication server systems according to the present disclosure provide a centralized communication infrastructure for use by a plurality of client applications. A plurality of network connections between clients and servers on a local data processing system to servers and clients on a remote data processing system are routed to a single channel, providing a single point for monitoring, auditing and securing such connections. Coordinated control of load balancing and failover are provided by using a single communications stack for the channel that supports the plurality of network connections. Systems according to the present disclosure provide a single process that supports both client cache functionality and communication with a web tier of the organization's network. Such systems map client web requests to HTTP and submit them to the web tier, with the result that clients may not need to do HTTP processing.

Communication server systems according to the disclosure provide a single user authentication challenge for clients on the local data processing system, with reuse of credentials and security tokens as appropriate within an organization's security policy. Multiple clients connected to the same server may share session context and update events. Multiple clients connected to the same server may share a single server process, reducing server memory utilization. Systems according to the disclosure provide third-party security tokens for authentication, support for industry-standard authentication protocols and third party identity providers. Authentication challenges associated with proxy server access are detected and responses sent. Clients and servers connect directly to systems according to the disclosure via one or more secure operating system (OS) pipes.

Systems according to the disclosure provide a single open port between a web tier and the system, simplifying firewall interaction for all clients and server using connections through the system's channel. Such a single port reduces or eliminates the need for clients to create so-called "holes in the firewall."

Communication server systems according to the disclosure also provide a unified stack for providing forward and reverse proxy functionality. Multiple forward and reverse proxy servers may be shared and forward and reverse cache functionality provided across all clients and servers. Proxy servers may be set up to process proxy auto-configuration (PAC) files where an organization configures proxies from a central source. A single upgrade point is provided for simplified configuration and setup, as well as code modification and change distribution. Such configuration simplicity eases development of graphic user interface (GUI) tools for system set-up and analysis.

Provision of a plurality of such client and server services by a system according to the disclosure eases programming burdens on client and server developers by reducing the amount and complexity of code required to produce a client or server application, reducing the amount of application testing required and reducing development time for an application. Client and server applications may obtain HTTP and HTTPS functionality from such a system. Developers in multiple development environments (such as C++, Java, or .NET Framework) may all obtain such client and server services from a system according to the disclosure by calls to client bindings implemented in each environment. Systems according to the disclosure may be developed in a single environment, rather than in all implementation environments.

Updates to such a common library provide updated functionality to all clients and servers using the library. An organization may implement a security policy decision to use a particular cryptographic system (such as java standard crypto libraries or alternate AES Java crypto modules) by changing only the common library, rather than multiple client and server applications. Such a library may be used on both client and server platforms. Systems according to the disclosure provide a single point for certification of functional correctness.

FIGURE 1 depicts a block diagram of a data processing system 100 in which an embodiment can be implemented, for example as a secure multi-client communication server configured to perform processes as described herein. The data processing system 100 includes a processor 102 connected to a level two cache/bridge 104, which is connected in turn to a local system bus 106. The local system bus 106 may be, for example, a peripheral component interconnect (PCI) architecture bus. Also connected to the local system bus 106 in the depicted example are a main memory 108 and a graphics adapter 110. The graphics adapter 110 may be connected to a display 111.

Other peripherals, such as a local area network (LAN) / Wide Area Network / Wireless (*e.g.* WiFi) adapter 112, may also be connected to the local system bus 106. An expansion bus interface 114 connects the local system bus 106 to an input/output (I/O) bus 116. The I/O bus 116 is connected to a keyboard/mouse adapter 118, a disk controller 120, and an I/O adapter 122. The disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to the I/O bus 116 in the example shown is an audio adapter 124, to which speakers (not shown) may be connected for playing sounds. The keyboard/mouse adapter 118 provides a connection for a pointing device (not shown), such as a mouse, trackball, trackpointer, etc.

Those of ordinary skill in the art will appreciate that the hardware depicted in Figure 1 may vary for particular implementations. For example, other peripheral devices, such as an optical disk drive and the like, also may be used in addition or in place of the hardware depicted. The depicted example is provided for the purpose of explanation only and is not meant to imply architectural limitations with respect to the present disclosure.

A data processing system in accordance with an embodiment of the present disclosure includes an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft® Windows® (a product of Microsoft Corporation, located in Redmond, Washington) may be employed if suitably modified. The operating system is modified or created in accordance with the present disclosure as described.

The LAN/WAN/Wireless adapter 112 can be connected to a network 130 (not a part of data processing system 100), which can be any public or private data processing system network or combination of networks, as known to those of skill in the art, including the Internet. The data processing system 100 can communicate over the network 130 with a server system 140, which is also not part of the data processing system 100, but can be implemented, for example, as a separate data processing system 100. The data processing system 100 can communicate over the network 130 with a client system 150, which is also not part of the data processing system 100, but can be implemented, for example, as a separate data processing system 100.

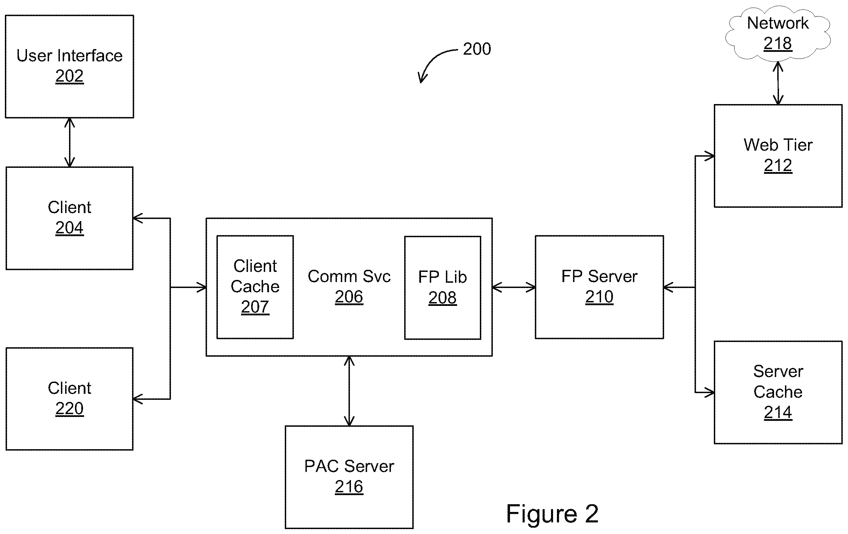

The data processing system 100 may be modified to operate as part of a secure multi-client communication server and configured to perform processes as described herein. The data processing system 100 may provide all or a portion of a system for providing secure multi-client communication, as depicted in FIGURE 2. In providing such service, the data processing system 100 may operate in the role of one or more elements of the system shown in FIGURE 2.

FIGURE 2 depicts a block diagram of a system 200 according to the disclosure. A user utilizes a user interface (UI) 202 to operate a client application 204. During operation, the client application 204 may issue requests for resources. Such resources may be available over a communication network 218, such as the Internet or an intranet, or may be cached in a file server cache 214. The client application 204 issues such requests to a secure multi-client communication server (SMCS) 206 according to the disclosure.

The SMCS 206 acts as an intermediary in the execution of all HTTP requests submitted from client applications. The SMCS 206 detects situations where a proxy server is in use and modifies the HTTP requests as appropriate. When a direct connection (no proxy server) is used, no modifications are made to the request and the SMCS 206 is just a pass-through. When one or more proxy servers are used, the SMCS 206 adds the correct proxy address information to the request and responds to any HTTP authentication challenges from the proxy server. Credentials may be obtained via a callback to the client application. The SMCS 206 provides login dialogs (for example, in Java or the .NET framework) that may be used by a requesting client to prompt a user for credentials. The client may alternatively provide its own proxy login dialog in its native UI, or it may instruct the SMCS 206 to display a login dialog instead of calling back to the client.

To reduce credential challenges, the SMCS 206 may be configured to cache credentials (e.g., to handle re-challenges). The SMCS 206 is multi-threaded and may provide multiple connections to a single forward proxy server. Such functionality is useful in cases where a user has multiple client applications running (e.g., computer-aided design (CAD) and product data management clients), with several clients sending requests to the SMCS 206 in parallel. The caching of credentials allows the SMCS 206 to avoid challenging the user once for each connection.

When configuration of the SMCS 206 indicates the use of a proxy auto-configuration (PAC) file, the SMCS 206 processes this file to determine a correct proxy address. The SMCS 206 also detects and responds to authentication challenges from a web server that provides the PAC file. As with proxy server challenges the SMCS 206 invokes a callback to the client which can either display a dialog or obtain credentials from its configuration.

Operation of the SMCS 206 is described for a client application and a forward proxy server, but a person of skill in the art will recognize that features of such the SMCS 206 also support operation of a server application and/or a reverse proxy server.

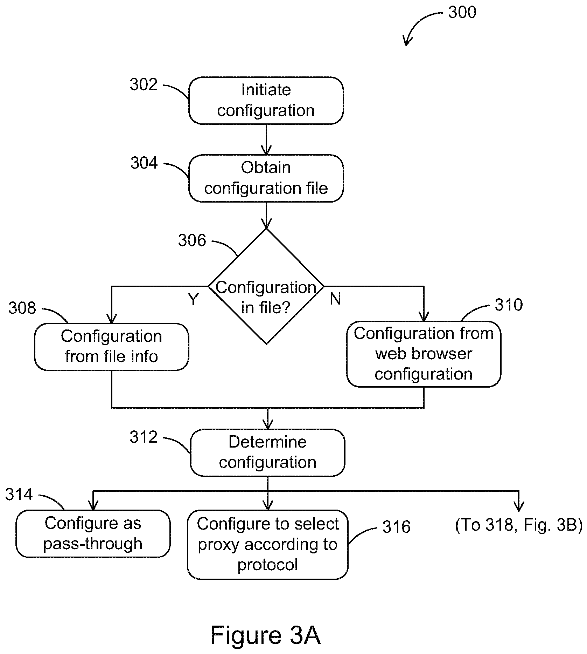

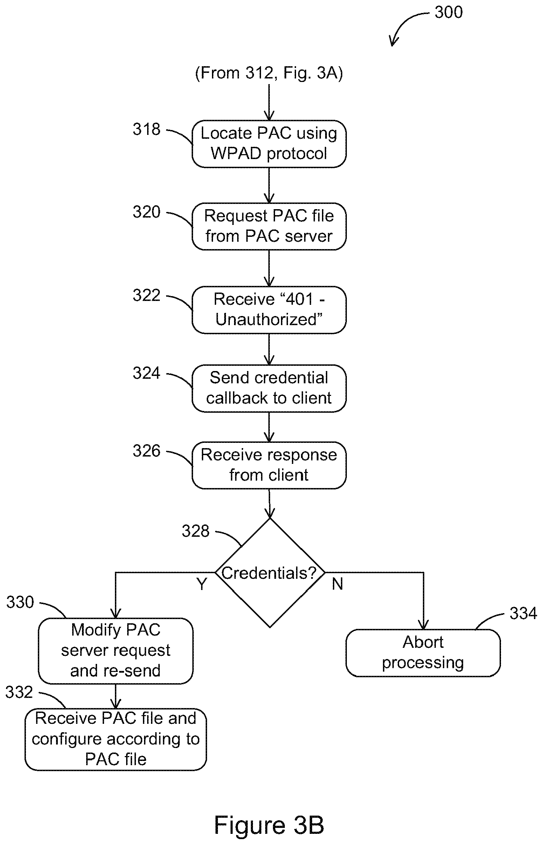

FIGURES 3A and 3B depict a process 300 in accordance with the disclosure that may be performed for proxy connection configuration of the SMCS 206. The process 300 is described with reference to the elements of the system 200 of FIGURE 2. Referring to FIGURE 3A, in step 302, the SMCS 206 initiates configuration. Typically, initialization is performed at startup of the SMCS 206. In step 304, the SMCS 206 obtains a configuration file. The file may be supplied by an operator during a configuration process. The file may be an identified file that is saved in an execution environment of the SMCS 206, the file having been identified by the operator during the configuration process. In step 306, the SMCS 206 determines whether the file includes actual configuration information. If so, in step 308, the SMCS 206 loads configuration information from the file. If the SMCS 206 determines in step 306 that the file indicates that the SMCS 206 should use browser proxy configuration information, in step 310 the SMCS 206 obtains configuration information from a web browser configuration based on the execution environment of the SMCS 206 process.

The SMCS 206 may configure its proxy connections in one of four configurations. In a direct connection configuration, the SMCS 206 acts as a pass-through, sending requests unmodified to a proxy server. In a fixed proxy server configuration, the SMCS 206 considers only the protocol of a request in determining a host address and port number for a destination proxy server.

In a PAC script configuration, the SMCS 206 uses a PAC file to map URLs to proxy server connections. In such a configuration, the connection type to use (for example direct, HTTP Proxy, SOCK-et-S (SOCKS) proxy, etc) and the host/port to contact are determined by evaluating the destination URL of the request with respect to the PAC file (which may be a JavaScript file). The PAC file may be downloaded based on a URL provided as a parameter in the configuration. The PAC file may map URLs to a list of connection types and addresses to provide fail-over functionality.

In a web proxy auto-discovery (WPAD) configuration, the SMCS 206 performs automatic detection of a PAC file via a WPAD protocol. In such a configuration, the SMCS 206 attempts to locate a PAC file using the WPAD protocol, without receiving manual configuration of the PAC file location.

In step 312, from configuration information obtained in either step 308 or step 310, the SMCS 206 determines its proxy connections configuration. If the configuration information indicates the direct connection configuration, in step 314 the SMCS 206 configures its proxy connections to send requests unmodified to the origin server specified in the request. If the configuration information indicates the fixed proxy server configuration, in step 320 the SMCS 206 configures its proxy connections to determine a host address and port number for a destination proxy server based on a protocol of a request.

If the configuration information indicates the PAC script configuration, in step 324 the SMCS 206 locates the PAC file at the URL provided as a parameter in the configuration information. If the configuration information indicates the WPAD configuration, the SMCS 206 locates the PAC file using the WPAD protocol in step 318 (referring now to FIGURE 3B). In either PAC script configuration or WPAD configuration, in step 320 the SMCS 206 sends a request for the PAC file to a PAC server 216. The PAC server 216 determines that the request requires authentication. If no authentication is supplied in the request (or if incorrect authentication is supplied), the PAC server 216 returns a message indicating that authentication is required (a "401 - Unauthorized" message).

In step 322, the SMCS 206 receives the "401 - Unauthorized" message and in response, in step 324, sends a credential callback request to the client application that sent the first request, which was received in step 302. Where the client is an interactive client, it displays a login dialog to a user to obtain credentials for the PAC server 216 from the user. Where the client is a non-interactive client (for example, a client cache) acting on behalf of an interactive client, the non-interactive client obtains the requested credentials by asking its interactive client, by reading configuration information from its execution environment, or by other appropriate process. If the client successfully obtains credentials, the client sends the credentials to the SMCS 206 in response to the credential callback request. If the client is unsuccessful in obtaining credentials, the client returns a failure message to the SMCS 206.

In step 326, the SMCS 206 receives a response from the client and, in step 328, determines whether the response is credentials or a failure message. If the response is credentials, in step 330 the SMCS 206 modifies request for the PAC file with the credentials and re-sends the request to the PAC server 216. The PAC server 216 accepts the credentials and returns the requested PAC file to the SMCS 206. In step 332, the SMCS 206 receives the PAC file and configures its proxy connections according to the PAC file. After completing configuration, the SMCS 206 terminates configuration processing.

If the SMCS 206 determines in step 328 that the client returned a failure message, in step 334 the SMCS 206 returns a failure message to the client that sent the first request, received in step 312. The SMCS 206 then aborts configuration processing.

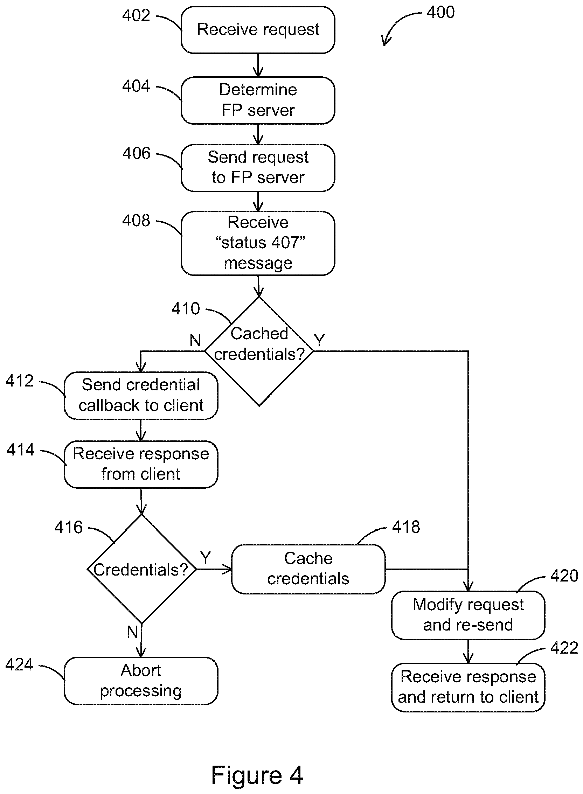

FIGURE 4 depicts a process 400 in accordance with the disclosure that may be performed by the SMCS 206 in responding to a request from the client application 204. The process 400 is described with reference to the elements of the system 200 of FIGURE 2. The SMCS 206 may also include a client cache 207 and a forward proxy library (FP library) 208 that provide certain functionality, as described below.

In step 402, the SMCS 206 receives a request from the client application 204 and determines a destination Uniform Resource Locator (URL) for the request. The SMCS 206 may convert the request to a HTTP request. The client cache 207 may recognize the requested resource and determine that the resource has been stored in a server cache 214 along with other resources stored in the server cache 214 in response to previous requests from client applications. The client cache 207 may direct the request for such a recognized resource to the server cache 214.

In step 404, the FP library 208 compares the destination URL of the request to mapping information in the FP library 208 configuration and determines that the request should be sent to a forward proxy server (FP server) 210. That is, the FP library 208 may map the request to the FP server 210. In response to the mapping, in step 406, the FP library 208 adds the address of the FP server 210 to the request and sends the request to the FP server 210. If an HTTP channel is not already open to the FP server 210, the SMCS 206 opens an HTTP channel to the FP server 210 in step 406.

The FP server 210 receives the request from the SMCS 206 and determines that the request requires security credentials. If none are supplied in the request (or if incorrect credentials are supplied), the FP server 210 returns a message indicating that proxy authentication is required (a "status 407" message). In step 408, the FP library 208 receives the "status 407" response. In step 410, the FP library 208 determines whether credentials for the FP server 210 have been cached in the SMCS 206. If no credentials are cached, in step 412 the SMCS 206 sends a credential callback request to the client application 204. The credential callback request may include the address and realm of the proxy server 210, which issued the credential challenge.

In response to the credential callback request from the SMCS 206, the client application 204, an interactive client, displays a login dialog to the user via the UI 202 to obtain credentials for the FP server 210 from the user. The login dialog may be provided by the client application 204 or by the SMCS 206. In another scenario, where the client is a non-interactive client (for example, a client cache) acting on behalf of an interactive client, the non-interactive client attempts to obtain the requested credentials by some appropriate process, as described with reference to FIGURE 3. For either type of client application, if the client successfully obtains credentials, the client sends the credentials to the SMCS 206 in response to the credential callback request. If the client is unsuccessful in obtaining credentials, the client returns a failure message to the SMCS 206.

In step 414, the SMCS 206 receives a response from the client and, in step 416, determines whether the response is credentials or a failure message. If the response is a failure message, in step 424 the SMCS 206 returns a failure message to the client application 204. The SMCS 206 then aborts its processing of the request.

If the SMCS 206 determines in step 416 that the client returned credentials, in step 418 the SMCS 206 caches the returned credentials in secure storage, for later use in response to other credential challenges from the FP server 210, in order to reduce the presentation of login dialogs to users of client applications connected to the SMCS 206. For greater security, the SMCS 206 stores the credentials in memory, rather than on disc, in order to reduce accessibility of the cached credentials to processes other than the SMCS 206. In step 420, the FP library 208 modifies the original request from the client application 204 to include the received credentials and re-sends the request to the FP server 210.

The FP server 210 verifies the credentials in the request and sends the request to the destination indicated by the original URL in the request. The FP server 210 may route the request to the communication network 218 via a web tier process 212 (for a request not recognized by the client cache 207) or to the file server cache 214 (as directed by the client cache 207). When a response to the request is received, the FP server 210 returns the response to the SMCS 206. In step 422, the FP library 208 receives the response and the SMCS 206 returns the response to the client application 204.

Subsequently, a client application 220 sends a request for a resource to the SMCS 206. In step 402, the SMCS 206 receives the request and determines a destination Uniform Resource Locator (URL) for the request. In step 404, the FP library 208 compares the destination URL to its configuration and determines that the request should be sent to the FP server 210. In response, in step 406, the FP library 208 adds the address of the FP server 210 to the request, determines that an HTTP channel is already open to the FP server 210, and sends the request to the FP server 210 over the open HTTP channel.

The FP server 210 receives the request from the SMCS 206 and determines that the request requires security credentials. Because none were supplied in the request (or because incorrect credentials were supplied), the FP server 210 returns a "status 407" message. In step 408, the FP library 208 detects the "status 407" response and, in step 410, determines that credentials for the FP server 210 were previously cached in the SMCS 206. In step 420, the FP library 208 modifies the original request from the client application 220 to include the cached credentials and re-sends the request to the FP server 210. When a response is received from the FP server 210, in step 422, the SMCS 206 returns the response to the client application 220.

In some embodiments, with the secure storage of additional information, the FP library 208 may modify the request from the client application 220 in step 406, prior to sending the request to the FP server 210 the first time. In this way, the overhead of the "status 407" response and re-sending of the request may be avoided.

According to various embodiments, one or more of the processes or steps described in relation to FIGURES 3A, 3B or 4 may be performed alternately, concurrently, repeatedly, or in a different order, unless otherwise specifically described or claimed. "Receiving," as used herein, can include loading from storage, receiving from another data processing system such as over a network, receiving via an interaction with a user, a combination of these, or otherwise, as recognized by those of skill in the art.

### List of used reference numerals, glossary; var 2

- 100: data processing system
- 102: processor
- 104: cache/bridge
- 106: local system bus
- 108: main memory
- 110: graphics adapter
- 111: display
- 112: Local Area Network / Wide Area Network / Wireless adapter
- 114: expansion bus interface
- 116: input/output bus, I/O bus
- 118: keyboard/mouse adapter
- 120: disk controller
- 122: I/O adapter
- 124: audio adapter
- 126: storage
- 130: network
- 140: server system
- 200: systen
- 202: user interface
- 204: client application
- 206: secure multi-client communication server
- 207: client cache
- 208: forward proxy library, FP library,
- 210: forward proxy server, FP server
- 212: web tier process
- 214: server cache
- 214: file server cache
- 216: proxy-auto-configuration server, PAC server
- 218: communication network
- 220: client application
- 300: process
- 302: Initiating configuration
- 304: obtaining configuration file
- 306: determining, whether the configuration file includes actual configuration information
- 308: loading configuration information from the configuration file
- 310: obtaining configuration information from a web browser
- 312: determining proxy connections configuration
- 314: configuring as pass-through and sending request unmodified to the origin server
- 316: configuring to select proxy according to protocol
- 318: locating the PAC file using the WPAD protocol
- 320: sending a request for the PAC file to a PAC server
- 322: receiving the "401 - Unauthorized" message
- 324: sending a credential callback request to the client application that sent the first request
- 326: receiving a response from the client
- 328: determining whether the response is credentials or a failure message
- 330: modifying a request for the PAC file with the credentials and re-sends the request to the PAC server
- 332: receiving the PAC file and configuring its proxy connections according to the PAC file
- 334: returning a failure message to the client, aborting configuration processing
- 400: process, method
- 402: receiving a request from a client application
- 404: determining that a request should be sent to a FP server, mapping a request to a FP server
- 406: adding the address of the FP server 210 to the request and sending the request to the FP server
- 408: receiving the "status 407" response
- 410: determining by the FP library whether credentials have been cached
- 412: sending a credential callback request to the client application
- 414: receiving a response from a client
- 416: determining whether the response is credentials or a failure message
- 418: caching credentials
- 420: Modifying request and re.-sending
- 422: receiving response and return to client
- 424: Abort processing, returning a failure message to the client application
- ASIC: Application specific integrated circuit
- CAD: Computer Aided Design
- FP: forward proxy
- HTTP: Hypertext Transfer Protocol
- I/O: Input/Output
- LAN: local Area Network
- OS: Operating System
- PAC: proxy-auto-configuration
- PCI: peripheral component interconnect
- PDM: product data management
- PLM: product lifecycle management
- SMCS: secure multi-client communication server
- UI: user interface
- URL: uniform resource locator
- WAN: wide area network
- WPAD: web proxy auto-discovery

## Claims

1. A method (400) for providing centralized communication services to a plurality of client applications (204, 220), the method (400) comprising:
- caching (402) in a communication server (206) one or more responses to a first plurality of requests received from a plurality of client (204, 220); determining that one of the first plurality of requests is a request for a resource stored in a server cache (214) and responding to the request with the stored resource;
- mapping (404) in the communication server (206) one or more of a second plurality of requests received from the plurality of client applications (204, 220) to one or more forward proxy servers (210);
- sending (406) from the communication server (206) two or more of the second plurality of requests to one of the one or more forward proxy servers (210) via a single HTTP channel; and
- obtaining (408) in the communication server (206) responses to one or more authentication challenges received from the one or more forward proxy servers (210) in response to one or more of the second plurality of requests.

2. The method of Claim 1, wherein mapping (404) one or more of the second plurality of requests received from the plurality of client applications (204, 220) to one or more forward proxy servers (210) comprises:
- determining (312) from a destination uniform resource locator (URL) of one of the second plurality of requests an address of a corresponding forward proxy server according to mapping information in a configuration file of the communication server; and
- adding the address of the corresponding forward proxy server to the request.

3. The method of Claim 1 or 2, wherein obtaining responses to one or more authentication challenges received from the one or more forward proxy servers (210) in response to one or more of the second plurality of requests comprises:
- determining that credentials for the proxy server sending an authentication challenge in response to one of the second plurality of requests are stored in the communication server (206); and
- adding the stored credentials to the request.

4. The method of Claim 3, wherein obtaining responses to one or more authentication challenges received from the one or more forward proxy servers in response to one or more of the second plurality of requests further comprises:
- determining (410) that credentials for the proxy server sending the authentication challenge in response to the request are not stored in the communication server;
- requesting (412) credentials from the client application that sent the request; and
- storing (418) credentials received (416) from the client application (204, 220).

5. The method of Claim 1, further comprising:
- obtaining in the communication server configuration information; and
- configuring the communication server proxy connections according to the communication information.

6. The method of Claim 5, wherein configuring the communication server proxy connections according to the communication information comprises:
- requesting a proxy auto-configuration file from a proxy auto-configuration server (210); and
- configuring the communication server proxy connections according to the proxy auto-configuration file.

7. A data processing system (100, 200) comprising:
- a processor (102); and
- accessible memory (108, 126),
- wherein the data processing system (100, 200) is particularly configured to perform the steps of the method (400) according to one of claims 1 to 6.

8. Computer readable storage medium encoded with computer-executable instructions that, when executed, cause a data processing system (100) to perform the steps of the method according to one of claims 1 to 6.

## Patentansprüche

1. Verfahren (400) zum Bereitstellen zentralisierter Kommunikationsdienste für eine Mehrzahl von Client-Anwendungen (204, 220), wobei das Verfahren Folgendes (400) umfasst:
- Aufnehmen (402) einer oder mehrerer Antworten auf eine erste Mehrzahl von Anfragen, die von einer Mehrzahl von Clients (204, 220) empfangen werden, in einen Cachespeicher in einem Kommunikationsserver (206), Bestimmen, dass eine der ersten Mehrzahl von Anfragen eine Anfrage nach einer in einem Server-Cachespeicher (214) gespeicherten Ressource ist, und Antworten auf die Anfrage mit der gespeicherten Ressource,
- Abbilden (404) einer oder mehrerer einer zweiten Mehrzahl von Anfragen, die von der Mehrzahl von Client-Anwendungen (204, 220) empfangen werden, in dem Kommunikationsserver (206) auf einen oder mehrere Forward-Proxy-Server (210),
- Senden (406) von zwei oder mehr der zweiten Mehrzahl von Anfragen von dem Kommunikationsserver (206) an einen des einen oder der mehreren Forward-Proxy-Server (210) über einen einzelnen HTTP-Kanal, und
- Einholen (408) von Antworten auf eine oder mehrere Authentifizierungsaufforderungen, die von dem einen oder den mehreren Forward-Proxy-Servern (210) als Antwort auf eine oder mehrere der zweiten Mehrzahl von Anfragen empfangen werden, in dem Kommunikationsserver (206).

2. Verfahren nach Anspruch 1, wobei das Abbilden (404) einer oder mehrerer der zweiten Mehrzahl von Anfragen, die von der Mehrzahl von Client-Anwendungen (204, 220) empfangen werden, auf einen oder mehrere Forward-Proxy-Server (210) Folgendes umfasst:
- Bestimmen (312) einer Adresse eines entsprechenden Forward-Proxy-Servers aus einem Ziel-Uniform-Resource-Locator (URL) einer der zweiten Mehrzahl von Anfragen gemäß Abbildungsinformationen in einer Konfigurationsdatei des Kommunikationsservers, und
- Hinzufügen der Adresse des entsprechenden Forward-Proxy-Servers zu der Anfrage.

3. Verfahren nach Anspruch 1 oder 2, wobei das Einholen von Antworten auf eine oder mehrere Authentifizierungsaufforderungen, die von dem einen oder den mehreren Forward-Proxy-Servern (210) als Antwort auf eine oder mehrere der zweiten Mehrzahl von Anfragen empfangen werden, Folgendes umfasst:
- Bestimmen, dass Anmeldedaten für den Proxy-Server, der eine Authentifizierungsaufforderung als Antwort auf eine oder mehrere der zweiten Mehrzahl von Anfragen sendet, in dem Kommunikationsserver (206) gespeichert sind, und
- Hinzufügen der gespeicherten Anmeldedaten zu der Anfrage.

4. Verfahren nach Anspruch 3, wobei das Einholen von Antworten auf eine oder mehrere Authentifizierungsaufforderungen, die von dem einen oder den mehreren Forward-Proxy-Servern als Antwort auf eine oder mehrere der zweiten Mehrzahl von Anfragen empfangen werden, ferner Folgendes umfasst:
- Bestimmen (410), dass Anmeldedaten für den Proxy-Server, der eine Authentifizierungsaufforderung als Antwort auf eine oder mehrere der zweiten Mehrzahl von Anfragen sendet, nicht in dem Kommunikationsserver gespeichert sind,
- Anfragen (412) von Anmeldedaten von der Client-Anwendung, die die Anfrage gesendet hat, und
- Speichern (418) von Anmeldedaten, die von der Client-Anwendung (204, 220) empfangen (416) werden.

5. Verfahren nach Anspruch 1, ferner Folgendes umfassend:
- Einholen von Konfigurationsinformationen in dem Kommunikationsserver und
- Konfigurieren der Proxy-Verbindungen des Kommunikationsservers gemäß den Kommunikationsinformationen.

6. Verfahren nach Anspruch 5, wobei das Konfigurieren der Proxy-Verbindungen des Kommunikationsservers gemäß den Kommunikationsinformationen Folgendes umfasst:
- Anfragen einer Proxy-Auto-Konfigurationsdatei von einem Proxy-Auto-Konfigurationsserver (210) und
- Konfigurieren der Proxy-Verbindungen des Kommunikationsservers gemäß der Proxy-Auto-Konfigurationsdatei.

7. Datenverarbeitungssystem (100, 200), Folgendes umfassend:
- einen Prozessor (102) und
- Speicher (108, 126), auf den zugegriffen werden kann,
- wobei das Datenverarbeitungssystem (100, 200) insbesondere dafür konfiguriert ist, die Schritte des Verfahrens (400) nach einem der Ansprüche 1 bis 6 durchzuführen.

8. Computerlesbares Speichermedium, das mit computerausführbaren Anweisungen codiert ist, die, wenn sie ausgeführt werden, ein Datenverarbeitungssystem (100) veranlassen, die Schritte des Verfahrens nach einem der Ansprüche 1 bis 6 durchzuführen.

## Revendications

1. Un procédé (400) de fourniture de services de communication centralisés à une pluralité d'applications clients (204, 220), le procédé (400) comprenant :
- la mise en mémoire tampon (402) dans un serveur de communication (206) d'un ou de plusieurs réponses à une première pluralité de demandes reçues à partir d'une pluralité de clients (204, 220),
la détermination qu'une demande de la première pluralité de demandes est une demande relative à une ressource conservée en mémoire dans une mémoire tampon de serveur (214) et la réponse à la demande avec la ressource conservée en mémoire,
- l'appariement (404) dans le serveur de communication (206) d'une ou de plusieurs demandes d'une deuxième pluralité de demandes reçues à partir de la pluralité d'applications clients (204, 220) avec un ou plusieurs serveurs mandataires directs (210),
- l'envoi (406) à partir du serveur de communication (206) de deux ou plus demandes de la deuxième pluralité de demandes à un des un ou plusieurs serveurs mandataires directs (210) par l'intermédiaire d'un canal HTTP unique, et
- l'obtention (408) dans le serveur de communication (206) de réponses à une ou plusieurs questions d'authentification reçues à partir des un ou plusieurs serveurs mandataires directs (210) en réponse à une ou plusieurs demandes de la deuxième pluralité de demandes.

2. Le procédé selon la revendication 1, dans lequel l'appariement (404) d'une ou de plusieurs demandes de la deuxième pluralité de demandes reçues à partir de la pluralité d'applications clients (204, 220) avec un ou plusieurs serveurs mandataires directs (210) comprend :
- la détermination (312), à partir d'un localisateur de ressources uniforme (URL) de destination d'une demande de la deuxième pluralité de demandes, d'une adresse d'un serveur mandataire direct correspondant en fonction d'informations d'appariement dans un fichier de configuration du serveur de communication, et
- l'ajout de l'adresse du serveur mandataire direct correspondant à la demande.

3. Le procédé selon la revendication 1 ou 2, dans lequel l'obtention de réponses à une ou plusieurs questions d'authentification reçues à partir des un ou plusieurs serveurs mandataires directs (210) en réponse à une ou plusieurs demandes de la deuxième pluralité de demandes comprend :
- la détermination que des justificatifs d'identité destinés à l'envoi par le serveur mandataire d'une question d'authentification en réponse à une demande de la deuxième pluralité de demandes sont conservés en mémoire dans le serveur de communication (206), et
- l'ajout des justificatifs d'identité conservés en mémoire à la demande.

4. Le procédé selon la revendication 3, dans lequel l'obtention de réponses à une ou plusieurs questions d'authentification reçues à partir des un ou plusieurs serveurs mandataires directs en réponse à une ou plusieurs demandes de la deuxième pluralité de demandes comprend en outre :
- la détermination (410) que des justificatifs d'identité destinés à l'envoi par le serveur mandataire de la question d'authentification en réponse à la demande ne sont pas conservés en mémoire dans le serveur de communication,
- la demande (412) de justificatifs d'identité à l'application client qui a envoyé la demande, et
- la conservation en mémoire (418) des justificatifs d'identité reçus (416) à partir de l'application client (204, 220).

5. Le procédé selon la revendication 1, comprenant en outre :
- l'obtention dans le serveur de communication d'informations de configuration, et
- la configuration des connexions mandataires du serveur de communication en fonction des informations de communication.

6. Le procédé selon la revendication 5, dans lequel la configuration des connexions mandataires du serveur de communication en fonction des informations de communication comprend :
- la demande d'un fichier d'autoconfiguration mandataire à partir d'un serveur d'autoconfiguration mandataire (210), et
- la configuration des connexions mandataires du serveur de communication en fonction du fichier d'autoconfiguration mandataire.

7. Un système de traitement de données (100, 200) comprenant :
- un processeur (102), et
- une mémoire accessible (108, 126),
- dans lequel le système de traitement de données (100, 200) est plus particulièrement configuré de façon à exécuter les étapes du procédé (400) selon l'une quelconque des revendications 1 à 6.

8. Un support à mémoire lisible par ordinateur codé avec des instructions exécutables par ordinateur qui, lorsqu'elles sont exécutées, amènent un système de traitement de données (100) à exécuter les étapes du procédé selon l'une quelconque des revendications 1 à 6.
